# FASCICULE DE BREVET EUROPEEN

(11) **EP 3 776 715 B1**
(45) Date de publication et mention de la délivrance du brevet: **04.10.2023**
(21) Numéro de dépôt: 19716884.2
(22) Date de dépôt: 08.04.2019
(51) Int. Cl.: H01M 50/20

(54) **UNITE DE BATTERIE AVEC DES MOYENS DE REGULATION DE LA TEMPERATURE INTEGRES AU BOITIER**
BATTERIEEINHEIT MIT GEHÄUSEINTEGRIERTER TEMPERATURREGELUNG
BATTERY UNIT WITH TEMPERATURE-REGULATING MEANS BUILT INTO THE HOUSING

(30) Priorité: 10.04.2018 FR 1853129
(43) Date de publication de la demande: 17.02.2021
(73) Titulaire: Sogefi Air & Cooling (SAS), 78280 Guyancourt (FR)
(72) Inventeur: BECKER, Nicolas, 68320 PORTE-DU-RIED (FR); FLORANC, Alexandre, 68280 LOGELHEIM (FR)
(74) Mandataire: Cabinet Nuss
(86) Numéro de dépôt international: PCT/EP2019/058801
(87) Numéro de publication internationale: WO 2019/197335

(56) Documents cités:
- EP-A1- 0 596 794
- WO-A1-2017/177831
- US-A1- 2016 190 664

## Description

La présente invention concerne le domaine des sources d'énergie électriques autonomes, en particulier celles embarquées dans des véhicules automobiles, et a pour objet une unité de batterie et un véhicule automobile hybride ou électrique comportant au moins une telle unité.

Les véhicules hybrides/électriques sont équipés d'une batterie permettant de stocker l'énergie électrique nécessaire à leur fonctionnement. Les enjeux actuels nécessitent d'optimiser la conception des unités de batterie aussi dénommées « packs batteries », afin d'en tirer les meilleures performances en terme de durée de vie (charge/décharge) et d'autonomie de roulage. Le temps de charge est également un facteur important dans l'utilisation quotidienne de ces packs batteries.

Les batteries mises en oeuvre ont idéalement besoin de fonctionner à des températures entre 10° C et 30° C, en particulier les batteries à haute densité de stockage, du type par exemple Li-ion ou Li-polymère. Une température trop basse impacte l'autonomie et une température trop élevée impacte la durée de vie des batteries. Il est donc nécessaire de réguler au mieux la température des batteries.

Dans le cadre des applications embarquées sur véhicules, il existe des solutions de batteries refroidies par air mais l'échange thermique reste assez limité. La tendance actuelle est d'utiliser un fluide caloporteur afin d'améliorer les échanges thermiques et d'augmenter l'efficacité de la régulation.

De plus, les logements de réception de ces batteries peuvent être réalisés directement par une partie du véhicule ou consister en des cavités formées dans une pièce structurelle de ce véhicule. Toutefois, ces solutions sont très peu flexibles en termes d'implantation et rendent difficiles la maintenance. Les solutions de packs batteries autonomes et non intégrées dans la structure du véhicule sont de ce fait à privilégier.

De nombreuses conceptions existent dans l'état de la technique : elles utilisent des solutions métalliques (acier, aluminium, etc.) avec une distribution de fluide caloporteur par durites jusqu'à des plaques de refroidissement assemblées et disposées à l'intérieur du pack batterie, sur lesquelles reposent les modules regroupant les cellules ou éléments de la batterie.

Il en résulte une construction complexe, formée par l'assemblage d'un nombre important de pièces, nécessitant la réalisation de nombreux raccordements étanches lors de la fabrication (dont la tenue au vieillissement peut être problématique) et constituant une structure encombrante, multicomposante.

De plus, le boîtier de l'unité de batterie étant réalisé en métal (préférentiellement de l'aluminium), il ne peut isoler thermiquement et électriquement le pack batterie vers l'extérieur, présente de plus un prix de revient élevé et est sujet à la corrosion.

En particulier par les documents EP 0596794, US 2016/190664 et WO 2017/177831, on connait des constructions de batteries themorégulées faisant état de la plupart des limitations évoquées ci-dessus.

La présente invention a pour but de surmonter au moins les principales limitations précitées.

A cet effet, l'invention a pour objet une unité de batterie, notamment pour véhicule automobile hybride et/ou électrique, selon le préambule de la revendication 1 et présentant également les caractéristiques de la partie caractérisante de cette revendication.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
les figures 1A et 1B sont des vues en perspective selon deux angles différents d'une unité de batterie selon l'invention, et la figure 1C est une vue de cette unité avant assemblage des deux composants du boîtier ;

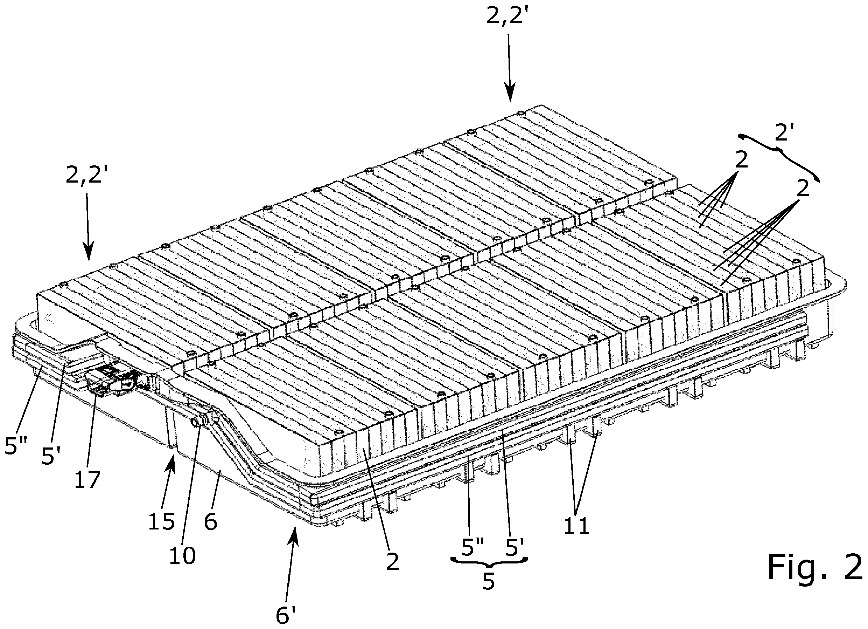

la figure 2 est une vue en perspective similaire à celle de la figure 1A, le couvercle étant enlevé ;
la figure 3 est une vue similaire à celle de la figure 2, les cellules ou éléments de batterie étant enlevés et seul le bac inférieur étant représenté ;
les figures 4A et 4B sont des vues en perspective selon deux directions différentes d'une unité de batterie selon l'invention, les flux de circulation du fluide caloporteur dans les moyens de distribution/collecte étant schématiquement représentés ;
la figure 5 est une vue partielle en coupe de l'unité de batterie représentée figures 1 et 4, la circulation du fluide caloporteur étant schématiquement représentée ;
la figure 6 est une vue en coupe selon un autre plan de l'unité de batterie des figures 1 et 4 ;
les figures 7A et 7B sont des vues en perspective d'une unité de batterie telle que représentée figure 1, avant et après son assemblage avec une structure de renfort rapporté ;
les figures 8A et 8B sont des vues similaires à la figure 1A de deux autres variantes de réalisation de l'unité de batterie selon l'invention ;
la figure 9 est une vue en perspective du bac inférieur faisant partie du boîtier de l'unité de batterie représentée figure 8B, et,
la figure 10 illustre sous forme d'une vue en perspective éclatée (pour les moyens de distribution/collecte), l'objet de la figure 2.

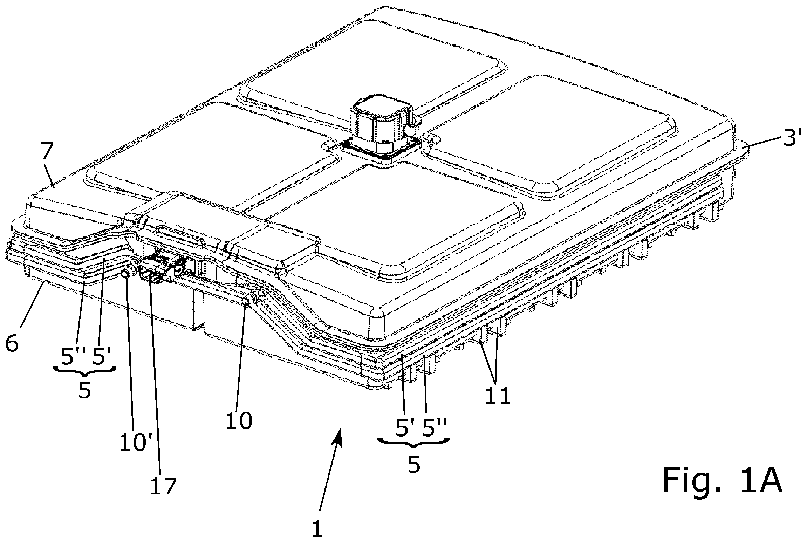

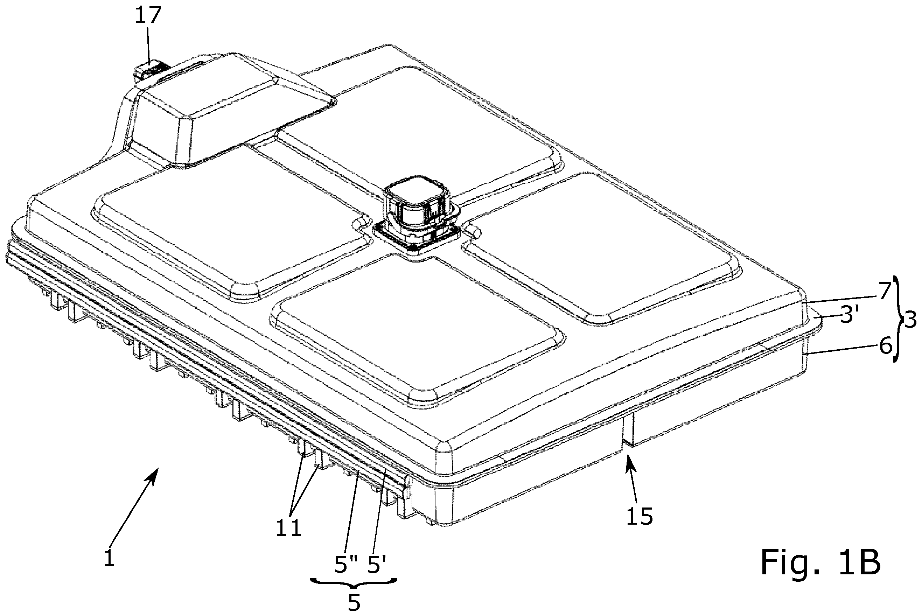

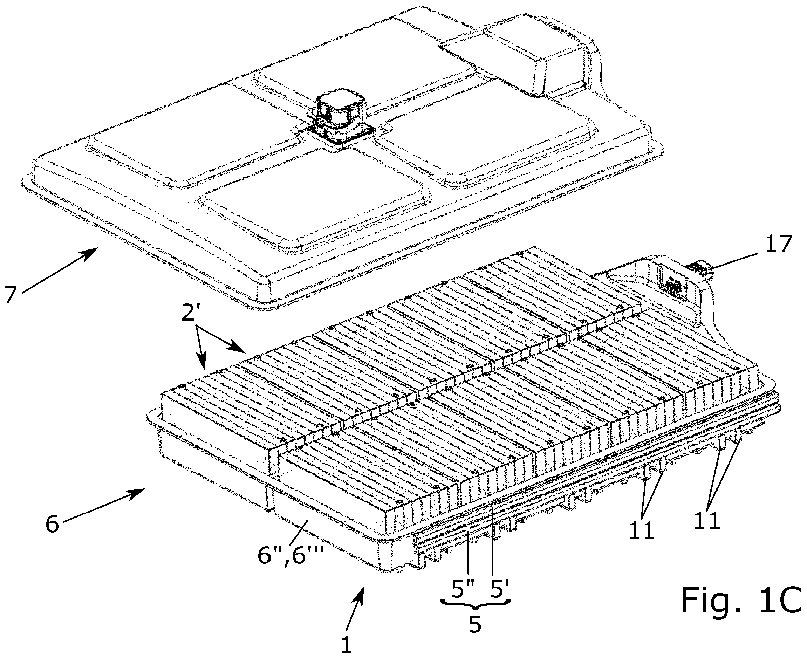

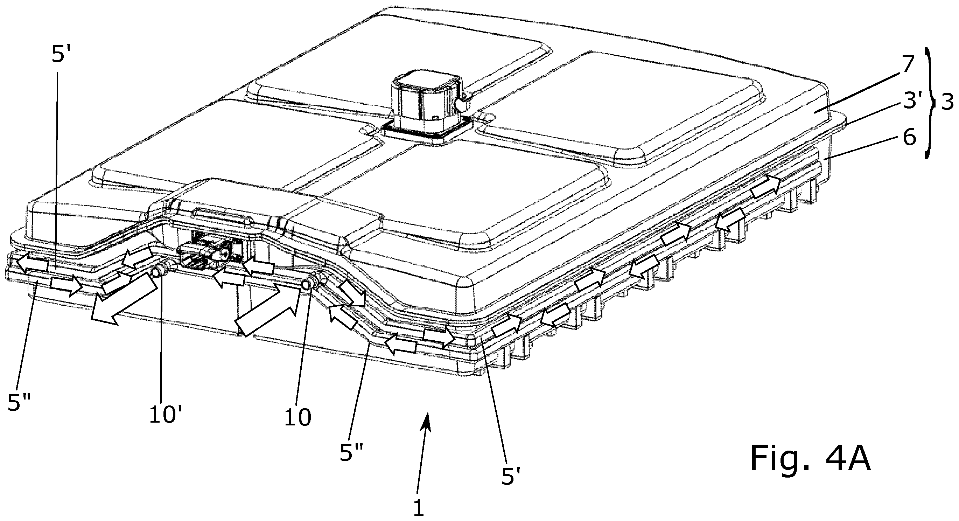

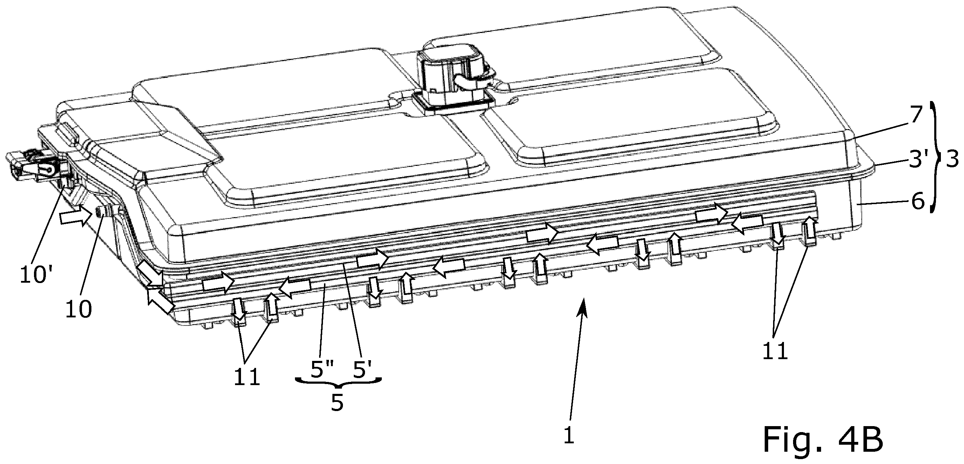

Les figures 1, 4, 7 et 8 illustrent une unité de batterie 1, notamment pour véhicule automobile hybride et/ou électrique, comprenant essentiellement, d'une part, une pluralité de cellules 2 ou d'éléments de batterie, le cas échéant regroupé(e)s physiquement et/ou électriquement en plusieurs blocs ou modules 2', d'autre part, un boîtier 3 logeant et entourant lesdit(e)s cellules ou éléments 2 et, enfin, des moyens 4, 5 de régulation de la température desdit(e)s cellules ou éléments 2 par circulation de fluide caloporteur.

Conformément à l'invention, le boîtier 3 est réalisé en un matériau plastique et est constitué par un bac inférieur 6, avec un fond 6' et des parois latérales 6", et par un couvercle supérieur 7, assemblés périphériquement, préférentiellement par vissage, et au moins le bac 6 comporte des moyens 4, 5 de distribution/collecte et de circulation du fluide caloporteur qui sont intégrés structurellement dans le corps 6', 6" dudit bac 6, en étant préférentiellement formés au moins partiellement d'un seul tenant avec lui.

Le boîtier 3 est ainsi constitué de deux parties 6 et 7 formant deux demi-coquilles, préférentiellement monobloc ou d'un seul tenant chacune, qui sont assemblées mutuellement et de manière étanche au niveau d'une unique zone d'assemblage 3' périphérique. Cet assemblage de seulement deux parties permet de loger et d'entourer les cellules 2 formant la batterie, en les encapsulant dans le boîtier 3 obtenu, tout en limitant au minimum les zones de jonction.

Une réalisation du boîtier en un matériau plastique rigide (matière thermoplastique par exemple polypropylène, polyamide, polyester, etc. laquelle est chargée ou non en additifs et/ou en fibres, telles que fibres de verre, fibres de carbone, et comporte ou non une grille de renfort) permet d'aboutir simultanément (par rapport à des boîtiers métalliques) à une meilleure isolation thermique et à une réduction des coûts de revient, et autorise (du fait de la grande variété et diversité de formes réalisables) une possible intégration des moyens de distribution/collecte 5 et de circulation 4 dans la structure même du boîtier 3 lors de sa fabrication par assemblage et lors de la fabrication de chacun de ses deux composants 6 et 7.

Avantageusement, les moyens 4 et 5 ne sont formés que partiellement et périphériquement dans la paroi du corps du bac 6 (ils n'en affaiblissent pas la structure), tout en contribuant à la compacité d'ensemble du boîtier 3 par leur intégration au moins partielle et leur accolement au corps du bac 6.

L'intégration de ces moyens 4 et 5 dans le boîtier 3, en particulier le bac 6, permet de s'affranchir de la mise en place et du raccordement étanche fastidieux de conduits et durites, tout en évitant aussi l'exposition de ces moyens 4 et 5 par rapport à l'environnement extérieur (moyens 5 de distribution/collecte accolés contre la paroi 6‴).

La zone d'assemblage étanche 3' du bac 6 avec le couvercle 7 peut consister en au moins une bande continue périphérique de contact, résultant d'une mise en contact sous pression par vissage, clippage ou analogue, des bords en regard ou obtenue par jonction par fusion de matière entre des bords en regard et à configurations complémentaires des deux parties 6 et 7 constitutives du boîtier 3.

Une étanchéité par joint de compression peut être réalisée au niveau de la ou entre les bande(s) de contact de la zone d'assemblage périphérique 3'. En mettant en oeuvre un assemblage amovible (vissage, clippage, etc.), il est possible d'effectuer des tests sur les cellules 2 après assemblage et de procéder aisément au remplacement d'au moins un module 2'.

En accord avec un mode de réalisation évitant tout contact direct entre le fluide liquide caloporteur et les éléments ou cellules 2, le bac 6 comporte, au niveau de son fond 6' sur lequel reposent les cellules ou éléments 2, au moins une portion de paroi intérieure 8 en contact avec lesdit(e)s cellules ou éléments 2, cette ou chaque portion de paroi intérieure 8 définissant avec la paroi 6‴ du bac 6 du boîtier 3 un volume étanche de circulation 9 de fluide caloporteur relié aux moyens de distribution/collecte 5, cette ou ces portion(s) de paroi intérieure(s) 8 formant, ensemble avec la paroi 6‴ du bac 6, un fond 6' de bac 6 qui est surfaciquement au moins partiellement, et préférentiellement majoritairement, à double paroi.

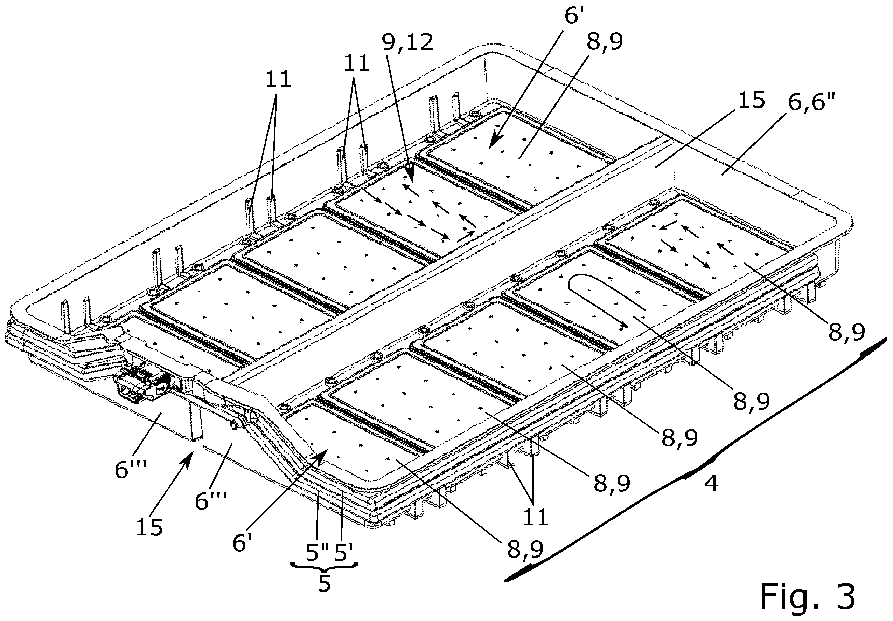

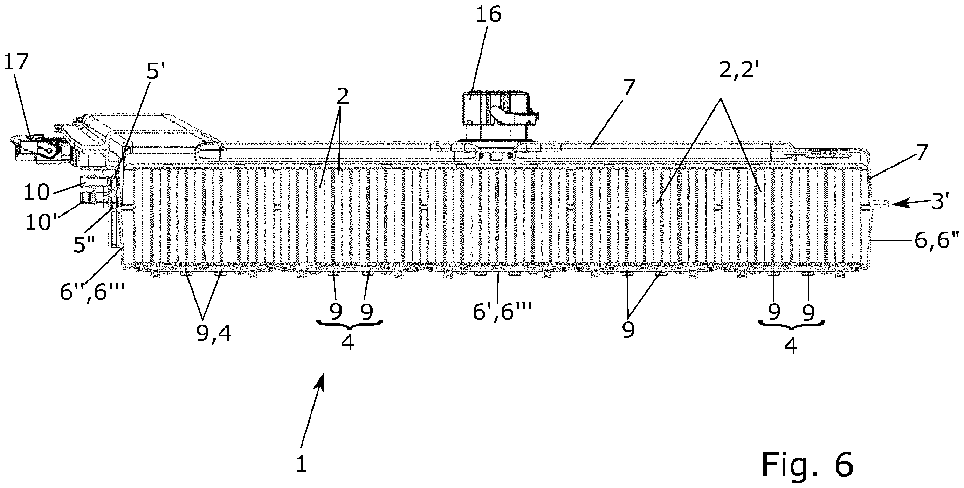

De manière avantageuse et comme cela ressort des figures 3, 5, 6 et 9 notamment, le fond 6' du bac 6 comporte au moins un circuit de circulation 4 de fluide caloporteur à extension surfacique, intégré dans la structure du fond 6' et en contact avec les cellules ou éléments 2 à travers la ou les portion(s) de paroi intérieure(s) 8. Ce ou chaque circuit 4 est avantageusement subdivisé en portions de circuit 9, dont chacune est préférentiellement associée à un module 2' et s'étend sous un module 2' correspondant. De plus, ledit ou chaque circuit de circulation 4 est préférentiellement relié aux moyens de distribution/collecte 5 et formé entre une ou plusieurs portion(s) de paroi intérieure(s) 8 en contact avec les cellules ou éléments 2' et la paroi 6‴ du bac 6.

Comme le montrent aussi les figures annexées, les moyens de distribution/collecte 5 sont arrangés sur une partie au moins du pourtour latéral du bac 6 et sont formés dans et/ou sur la face extérieure de la paroi 6‴ dudit bac 6, lequel présente avantageusement une forme rectangulaire, conférant au boîtier 3 sensiblement une forme parallélépipédique rectangle.

Dans ce dernier cas, les moyens de distribution/collecte 5 peuvent par exemple s'étendre sur trois des quatre côtés dudit rectangle.

Selon un mode de réalisation préféré, les moyens de distribution/collecte 5 comprennent au moins un conduit 5' d'alimentation de fluide caloporteur et au moins un conduit 5" de collecte et d'évacuation de fluide caloporteur. Chaque conduit 5', 5" comporte avantageusement un embout de raccordement respectif 10, 10' et chaque conduit 5', 5" est relié aux moyens de circulation 4 de fluide caloporteur, intégrés dans le fond 6' au moins du bac 6, par des lignes secondaires ou de piquage 11 traversant la paroi 6‴ dudit bac 6. Ainsi, les interfaces 10, 10' de connexion fluidique avec l'extérieur, ainsi que les liaisons fluidiques avec le ou les circuits de circulation 4, sont également intégrées dans la structure du bac 6.

Afin de pouvoir segmenter la surface d'échange, par exemple en accord avec le regroupement des cellules 2 en modules ou blocs 2', et de pouvoir imposer un cheminement prédéterminé au flux de liquide caloporteur, les moyens de circulation 4 intégrés dans le corps 6', 6" du bac 6, préférentiellement au niveau de son fond 6' entre des portions de paroi intérieures 8 et la paroi 6‴ dudit bac 6, comprennent des volumes de circulation 9 élémentaires formés chacun entre une portion de paroi intérieure 8, en contact avec les cellules ou éléments 2, d'une part, et la paroi 6‴ du bac 6, d'autre part, et reliés tous fluidiquement soit individuellement en série et collectivement aux moyens de circulation 4, soit individuellement et en parallèle aux moyens de circulation 4.

Préférentiellement, chaque volume de circulation élémentaire 9 présente une forme générale en U, en S ou en serpentin, les extrémités libres dudit U, S ou serpentin étant reliées fluidiquement soit à des volumes de circulation élémentaires 9 respectivement précédent et suivant dans un arrangement série, soit aux conduits 5, 5" des moyens de circulation 4, par des lignes secondaires ou de piquage 11. La forme en U notamment est simple à réaliser et autorise des branches de grande largeur. Toutefois d'autres formes de circuit élémentaires de circulation 9, telle qu'une forme en S, en Z ou en serpentin sont également possibles.

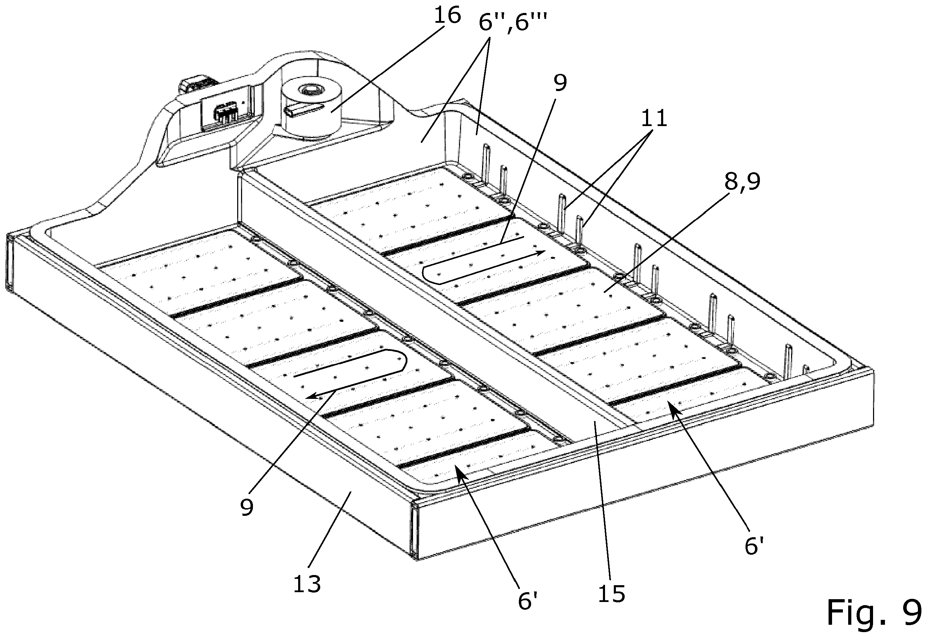

Selon une variante pratique, les deux branches du U sont sensiblement accolées entre elles et chaque branche présente ainsi une largeur importante, offrant une surface d'échange maximale tout en permettant de diriger le flux de circulation du fluide liquide caloporteur de l'entrée vers la sortie du volume élémentaire 9 concerné (cf. figures 3 et 9).

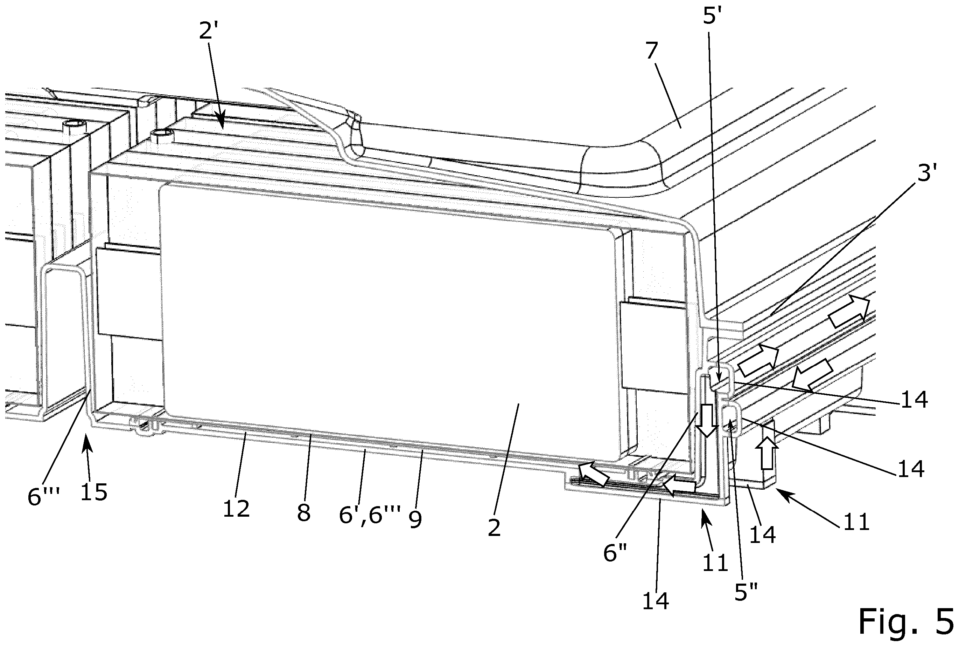

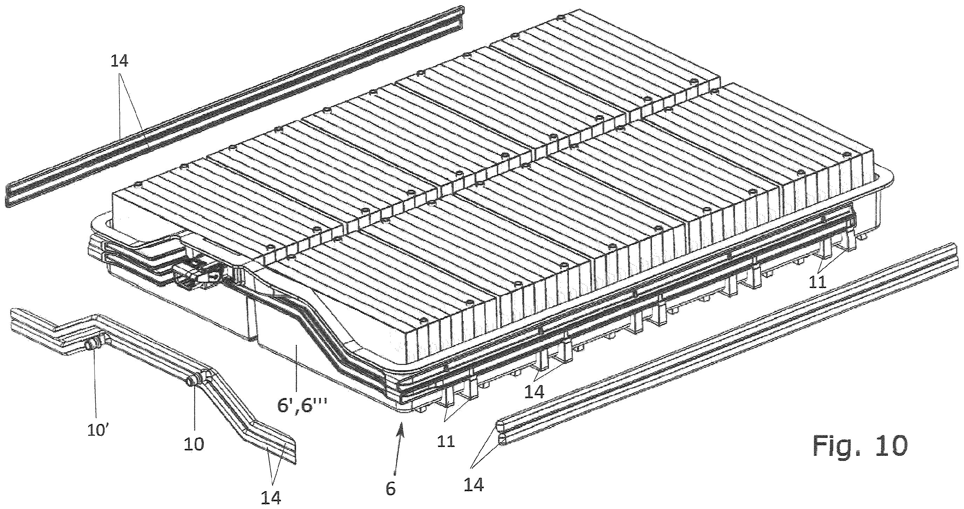

Conformément à une caractéristique de l'invention, illustrée de manière exemplaire par les figures 5 et 10, les conduits d'alimentation 5' et les conduits de collecte et d'évacuation 5" des moyens de distribution/collecte 5, et le cas échéant les lignes secondaires ou de piquage 11, comprennent des parois tubulaires formées partiellement par la paroi 6‴ du bac 6 et partiellement par de la matière thermoplastique 14 surmoulée sur ladite paroi 6‴ ou par des portions de paroi complémentaires 14 assemblées par soudure avec ladite paroi 6‴.

La répartition et la découpe desdites parois tubulaires, entre leurs parties formées par la paroi 6‴ du bac 6 et leurs parties rapportées par surmoulage 14, dépendent des possibilités du moule de moulage du bac 6 et de la complexité de configuration du bac 6 lui-même.

La nature du matériau et l'épaisseur des portions de paroi 8, ainsi que la conformation de leurs faces en contact avec les éléments ou cellules 2 doivent être choisis pour aboutir à un échange thermique maximal entre ces éléments et le fluide liquide caloporteur.

Selon une variante constructive préférée, ressortant par exemple des figures 3, 5, 6 et 9, la ou chaque portion de paroi intérieure 8 consiste en une pièce rapportée, telle qu'une plaque, solidarisée de manière étanche avec la paroi 6‴ du fond 6' du bac 6, au niveau d'un renfoncement ou cuvette 12 correspondant(e) de ce dernier, la ou chaque portion de paroi intérieure 8 étant réalisée en un matériau à conductivité thermique élevée, notamment un matériau métallique ou un matériau thermoplastique à propriétés thermoconductrices améliorées.

Ainsi, la paroi 6‴ du corps du bac 6, ainsi que la paroi du couvercle 7, peuvent être réalisées en un matériau thermoplastique à propriétés mécaniques et isolantes augmentées (par exemple par des additifs), alors que les portions de paroi intérieures 8 présentent un coefficient de transfert thermique élevé.

Chaque renfoncement de la paroi 6‴ du fond 6' du bac pourra par exemple être subdivisé en deux régions sur une portion de sa longueur par une paroi de partition, de manière à constituer lorsqu'il est fermé par une partie de paroi interne 8 un volume de circulation 9 en U.

Le bac 6 et, dans une moindre mesure, le couvercle 7, doivent présenter une résistance mécanique suffisante pour loger les modules 2' de batterie, en les protégeant, et peuvent par exemple comporter des nervures de rigidification à cet effet.

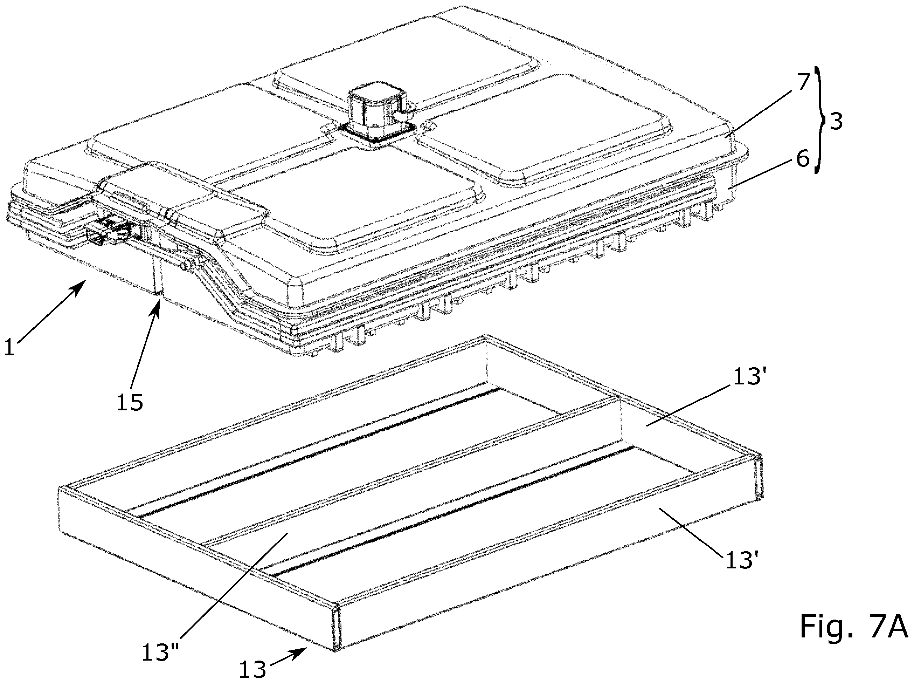

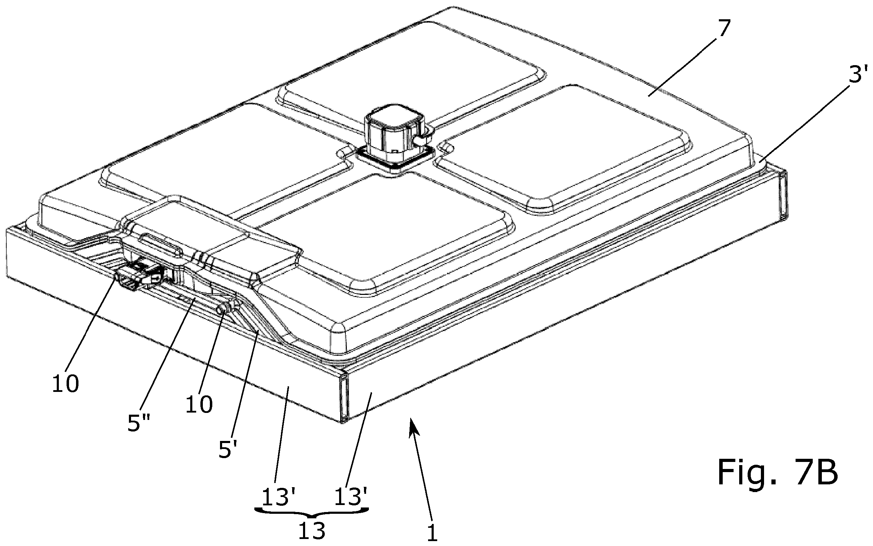

En variante, ou de manière complémentaire, pour aboutir à une résistance et à une rigidité plus importantes, le bac 6 peut comprendre soit une structure de renfort 13 intégrée dans le corps 6', 6" du bac 6, par exemple surmoulée par le matériau thermoplastique constituant la paroi 6‴ dudit bac 6 (non représenté), soit une structure de renfort 13 coopérant extérieurement par conjugaison de formes avec la paroi 6‴ thermoplastique dudit bac 6, par exemple du type cadre fournissant notamment une rigidification médiane et périphérique (figures 7A et 7B).

Afin de renforcer la rigidité du fond 6', et éventuellement augmenter les zones d'échange thermique entre le fluide caloporteur et les cellules ou éléments 2, il peut être prévu que le bac 6 comprenne au moins une paroi intérieure de subdivision 15, s'étendant d'un seul tenant depuis le fond 6' (et préférentiellement entre deux parois latérales 6" opposées), coopérant avantageusement avec une structure de renfort 13 et intégrant, le cas échéant, des volumes de circulation de fluide caloporteur, faisant préférentiellement partie des moyens 4 de circulation du bac 6 et reliés fluidiquement aux moyens de distribution/collecte 5 (figures 1C, 3, 5, 7A).

La structure de renfort 13 peut par exemple comporter des parois latérales périphériques 13', encerclant le bac 6 et protégeant les conduites de distribution 5' et de collecte/évacuation 5" en les recouvrant. Une paroi médiane 13" de la structure 13 peut quant à elle coopérer (en s'emboîtant) avec une paroi interne de subdivision 15 creuse, formant ainsi poutre médiane de rigidification du bac 6.

En vue d'augmenter davantage encore la surface d'échange thermique entre le fluide caloporteur et les cellules ou éléments 2, il peut en outre être prévu que le couvercle 7 comporte également des moyens de distribution/collecte et de circulation de fluide caloporteur intégrés structurellement dans le corps dudit couvercle 7, à l'instar du bac 6 et comme évoqué ci-dessus. Il peut alors présenter avantageusement, au moins partiellement, une structure à double paroi fournissant des volumes de circulation, par exemple formés entre des portions de paroi intérieures et la paroi extérieure dudit couvercle 7, lesdites portions de paroi intérieures étant préférentiellement en contact avec les parties supérieures des cellules ou éléments 2 de batterie et les moyens de distribution/collecte du couvercle étant avantageusement reliés fluidiquement aux moyens de distribution/collecte 5 du bac 6.

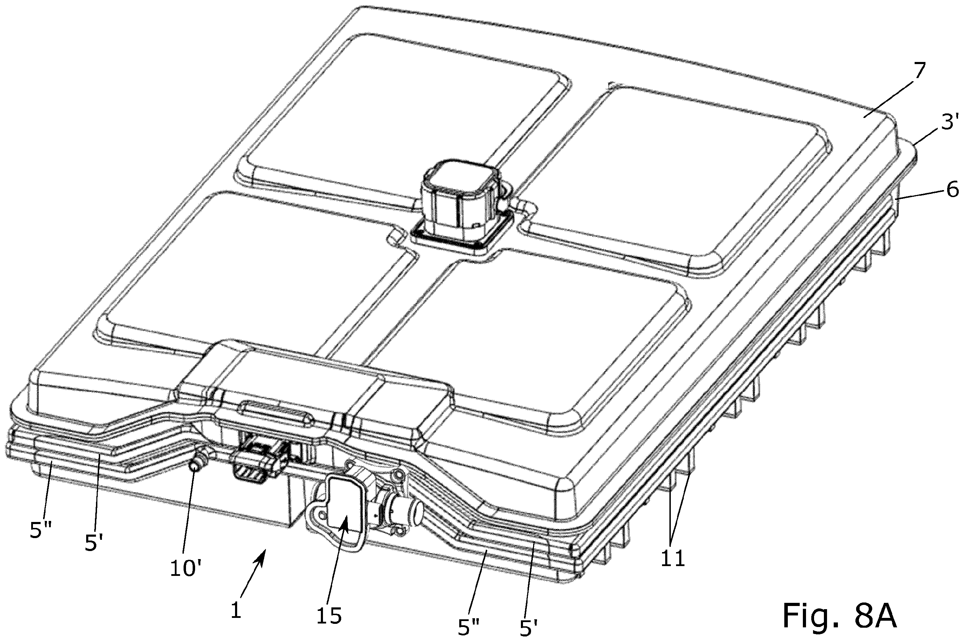

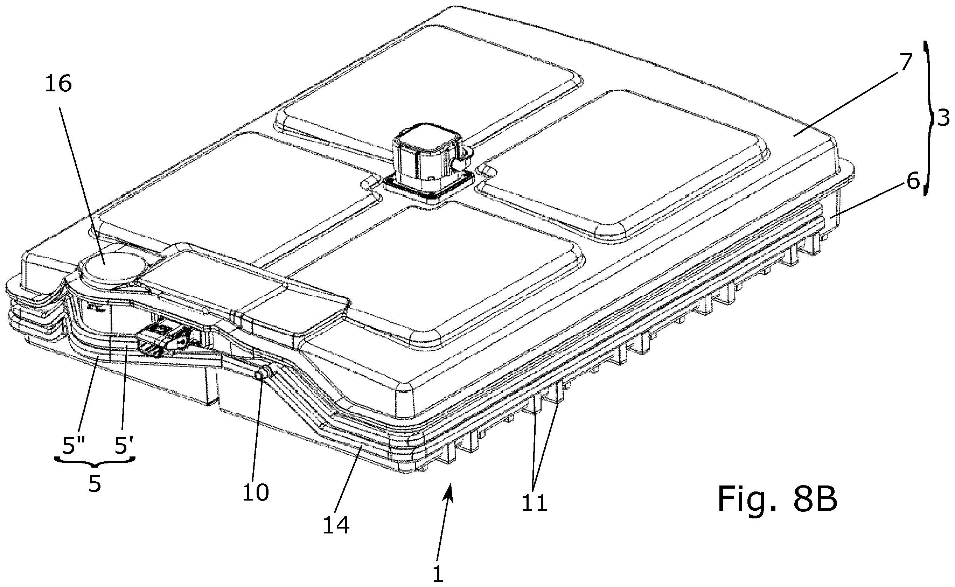

Selon une caractéristique additionnelle de l'invention, ressortant des figures 8A, 8B et 9, le boîtier 3 peut intégrer une ou plusieurs fonctionnalités en relation avec la gestion du liquide caloporteur.

Ainsi, un moyen 16 de contrôle de la température, de la circulation et/ou de la distribution/collecte du liquide caloporteur peut être intégré structurellement, voire matériellement, au moins en partie dans le boîtier 3, par exemple au niveau des moyens de distribution/collecte 5 ou des parois latérales 6" du bac 6.

L'invention a également pour objet un véhicule automobile, en particulier électrique ou hybride, caractérisé en ce qu'il comprend au moins une unité de batterie 1 telle que décrite ci-dessus. Cette unité de batterie 1 comporte en outre au moins un moyen de mesure de température interne, des moyens de raccordement électrique des cellules ou éléments 2 entre elles et des moyens 17 de branchement extérieur, ces derniers étant avantageusement partiellement formés avec ou dans la paroi 6‴ du bac 6 et/ou la paroi du couvercle 7.

Bien entendu, l'invention n'est pas limitée à des modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention telle que définie par les revendications.

## Revendications

1. Unité de batterie (1), notamment pour véhicule automobile hybride et/ou électrique, comprenant, d'une part, une pluralité de cellules (2) ou d'éléments de batterie, le cas échéant regroupé(e)s physiquement et/ou électriquement en plusieurs blocs ou modules (2'), d'autre part, un boîtier (3) logeant et entourant lesdit(e)s cellules ou éléments (2) et, enfin, des moyens (4, 5) de régulation de la température desdit(e)s cellules ou éléments (2) par circulation de fluide caloporteur,
unité de batterie (1) **caractérisée**
**en ce que** le boîtier (3) est réalisé en un matériau plastique et est constitué par un bac inférieur (6) moulé, avec un fond (6') et des parois latérales (6") formant le corps (6', 6") du bac (6), et par un couvercle supérieur (7), assemblés périphériquement, préférentiellement par vissage,
**en ce qu'**au moins le bac (6) comporte des moyens (4, 5) de distribution et de collecte et de circulation du fluide caloporteur qui sont intégrés structurellement dans le corps (6', 6") dudit bac (6), en étant formés au moins partiellement d'un seul tenant avec lui,
et,
**en ce que** les moyens de distribution et de collecte (5) comprennent au moins un conduit (5') d'alimentation de fluide caloporteur et au moins un conduit (5") de collecte et d'évacuation de fluide caloporteur, et sont arrangés sur une partie au moins du pourtour latéral du bac (6) et sont formés dans et/ou sur la face extérieure de la paroi (6‴) du corps (6', 6") dudit bac (6).

2. Unité de batterie selon la revendication 1, **caractérisée en ce que** le bac (6) comporte, au niveau de son fond (6') sur lequel reposent les cellules ou éléments (2), au moins une portion de paroi intérieure (8) en contact avec lesdit(e)s cellules ou éléments (2), cette ou chaque portion de paroi intérieure (8) définissant avec la paroi (6‴) du corps (6', 6") du bac (6) du boîtier (3) un volume de circulation (9) de fluide caloporteur relié aux moyens de distribution et de collecte (5), cette ou ces portion(s) de paroi intérieure(s) (8) formant, ensemble avec la paroi (6‴) du corps (6', 6") du bac (6), le fond (6') du bac (6) qui est surfaciquement au moins partiellement, et préférentiellement majoritairement, à double paroi.

3. Unité de batterie selon la revendication 1 ou 2, **caractérisée en ce que** le fond (6') du bac (6) comporte au moins un circuit de circulation (4) de fluide caloporteur à extension surfacique, intégré dans la structure du fond (6') et en contact avec les cellules ou éléments (2) à travers la ou les portions(s) de paroi intérieure(s) (8), ce ou chaque circuit (4) étant avantageusement subdivisé en portions de circuit (9), dont chacune est préférentiellement associée à un module (2') et s'étend sous ce module (2') correspondant, et **en ce que** ledit ou chaque circuit de circulation (4) est relié aux moyens de distribution et de collecte (5) et formé entre une ou plusieurs portion(s) de paroi intérieure(s) (8) en contact avec les cellules ou éléments (2') et la paroi (6‴) du corps (6', 6") du bac (6).

4. Unité de batterie selon l'une quelconque des revendications 1 à 3, **caractérisée en ce que** le bac (6) présente une forme rectangulaire.

5. Unité de batterie selon l'une quelconque des revendications 1 à 4, **caractérisée en ce que** chaque conduit d'alimentation ou de collecte et d'évacuation (5', 5") comporte un embout de raccordement respectif (10, 10') et est relié aux moyens de circulation (4) de fluide caloporteur, intégrés dans le fond (6') au moins du bac (6), par des lignes secondaires ou de piquage (11) traversant la paroi (6‴) du corps (6', 6") dudit bac (6).

6. Unité de batterie selon l'une quelconque des revendications 1 à 5, **caractérisée en ce que** les moyens de circulation (4) intégrés dans le corps (6', 6") du bac (6), préférentiellement au niveau de son fond (6') entre des portions de paroi intérieures (8) et la paroi (6‴) du corps (6', 6") dudit bac (6), comprennent des volumes de circulation (9) élémentaires formés chacun entre une portion de paroi intérieure (8) en contact avec les cellules ou éléments (2), d'une part, et la paroi (6"') du corps (6', 6") du bac (6), d'autre part, et reliés tous fluidiquement soit individuellement en série et collectivement aux moyens de circulation (4), soit individuellement et en parallèle aux moyens de circulation (4).

7. Unité de batterie selon la revendication 6, **caractérisée en ce que** chaque volume de circulation élémentaire (9) présente une forme générale en U, en S ou en serpentin, les extrémités libres dudit U, S ou serpentin étant reliées fluidiquement soit à des volumes de circulation élémentaires (9) respectivement précédent et suivant dans un arrangement série, soit aux conduits (5, 5") des moyens de circulation (4), par des lignes secondaires ou de piquage (11).

8. Unité de batterie selon l'une quelconque des revendications 5 à 7, **caractérisée en ce que** les conduits d'alimentation (5') et d'évacuation (5") des moyens de distribution et de collecte (5), et le cas échéant les ou des lignes secondaires ou de piquage (11), comprennent des parois tubulaires formées partiellement par la paroi (6‴) du corps (6', 6") du bac (6) et partiellement par de la matière thermoplastique (14) surmoulée sur ladite paroi (6‴) ou par des portions de paroi complémentaires (14) assemblées par soudure avec ladite paroi (6‴).

9. Unité de batterie selon l'une quelconque des revendications 2 ou 3 et 5 à 8, pour autant qu'elles se rattachent à la revendication 2, **caractérisée en ce que** la ou chaque portion de paroi intérieure (8) consiste en une pièce rapportée, telle qu'une plaque, solidarisée de manière étanche avec la paroi (6‴) du fond (6') du bac (6), au niveau d'un renfoncement ou d'une cuvette (12) correspondant(e) de ce dernier, la ou chaque portion de paroi intérieure (8) étant réalisée en un matériau à conductivité thermique élevée, notamment un matériau métallique ou un matériau thermoplastique à propriétés thermoconductrices améliorées.

10. Unité de batterie selon l'une quelconque des revendications 1 à 9, **caractérisée en ce que** le bac (6) comprend une structure de renfort (13) intégrée dans le corps (6', 6") du bac (6), par exemple surmoulée par le matériau thermoplastique constituant la paroi (6‴) du corps (6', 6") dudit bac (6).

11. Unité de batterie selon l'une quelconque des revendications 1 à 9, **caractérisée en ce que** le bac (6) comprend une structure de renfort (13) coopérant extérieurement par conjugaison de formes avec la paroi (6‴) thermoplastique dudit bac (6), par exemple du type cadre fournissant notamment une rigidification médiane et périphérique.

12. Unité de batterie selon l'une quelconque des revendications 1 à 11, **caractérisée en ce que** le bac (6) comprend au moins une paroi intérieure de subdivision (15), s'étendant d'un seul tenant depuis le fond (6'), coopérant avantageusement avec une structure de renfort (13) et intégrant, le cas échéant, des volumes de circulation de fluide caloporteur, faisant préférentiellement partie des moyens (4) de circulation du bac (6) et reliés fluidiquement aux moyens de distribution et de collecte (5).

13. Unité de batterie selon l'une quelconque des revendications 1 à 12, **caractérisée en ce que** le couvercle (7) comporte également des moyens de distribution et de collecte et de circulation de fluide caloporteur intégrés structurellement dans le corps dudit couvercle (7), et présente avantageusement, au moins partiellement, une structure à double paroi fournissant des volumes de circulation, par exemple formés entre des portions de paroi intérieures et la paroi extérieure dudit couvercle (7), lesdites portions de paroi intérieures étant préférentiellement en contact avec les parties supérieures des cellules ou éléments (2) de batterie et les moyens de distribution et de collecte du couvercle étant avantageusement reliés fluidiquement aux moyens de distribution et de collecte (5) du bac (6).

14. Unité de batterie selon l'une quelconque des revendications 1 à 13, **caractérisée en ce qu'**un moyen (16) de contrôle de la température, de la circulation et/ou de la distribution du liquide caloporteur est intégré structurellement, voire matériellement, au moins en partie dans le boîtier (3), par exemple au niveau des moyens de distribution et de collecte (5) ou des parois latérales (6") du corps (6', 6") du bac (6).

15. Véhicule automobile, en particulier électrique ou hybride, **caractérisé en ce qu'**il comprend au moins une unité de batterie (1) selon l'une quelconque des revendications 1 à 14, cette unité de batterie (1) comportant en outre au moins un moyen de mesure de température interne, des moyens de raccordement électrique des cellules ou éléments (2) entre elles et des moyens (17) de branchement extérieur, ces derniers étant avantageusement partiellement formés avec ou dans la paroi (6‴) du corps (6', 6") du bac (6) et/ou la paroi du couvercle (7).

## Patentansprüche

1. Batterieeinheit (1), insbesondere für ein Hybrid- und/oder Elektrokraftfahrzeug, umfassend zum einen eine Mehrzahl von Batteriezellen (2) oder -elementen, die gegebenenfalls physisch und/oder elektrisch zu mehreren Blöcken oder Modulen (2') zusammengefasst sind, zum anderen ein Gehäuse (3), das die Zellen oder Elemente (2) aufnimmt und umgibt, und schließlich Einrichtungen (4, 5) zur Regelung der Temperatur der Zellen oder Elemente (2) durch Wärmeträgerfluidzirkulation,
wobei die Batterieeinheit (1) **dadurch gekennzeichnet ist, dass** das Gehäuse (3) aus einem Kunststoff ausgeführt ist und aus einer geformten unteren Wanne (6) mit einem Boden (6') und Seitenwänden (6'), die den Körper (6', 6") der Wanne (6) bilden, und aus einem oberen Deckel (7) besteht, die umfänglich zusammengefügt sind, bevorzugt durch Verschraubung,
dass mindestens die Wanne (6) Einrichtungen (4, 5) zum Verteilen und zum Sammeln und zur Zirkulation des Wärmeträgerfluids beinhaltet, die strukturell in den Körper (6', 6") der Wanne (6) integriert sind, wobei sie mindestens teilweise einstückig mit ihm gebildet sind, und
dass die Einrichtungen zum Verteilen und zum Sammeln (5) mindestens einen Kanal (5') zum Zuführen von Wärmeträgerfluid und mindestens einen Kanal (5") zum Sammeln und zum Abführen von Wärmeträgerfluid umfassen und über mindestens einen Teil des seitlichen Umfangs der Wanne (6) angeordnet sind und in und/oder auf der Außenseite der Wand (6‴) des Körpers (6', 6") der Wanne (6) gebildet sind.

2. Batterieeinheit nach Anspruch 1, **dadurch gekennzeichnet, dass** die Wanne (6) an ihrem Boden (6), auf dem die Zellen oder Elemente (2) aufliegen, mindestens einen Innenwandabschnitt (8) beinhaltet, der in Kontakt mit den Zellen oder Elementen (2) ist, wobei dieser oder jeder Innenwandabschnitt (8) mit der Wand (6‴) des Körpers (6', 6") der Wanne (6) des Gehäuses (3) ein Wärmeträgerfluid-Zirkulationsvolumen (9) definiert, das mit den Einrichtungen zum Verteilen und zum Sammeln (5) verbunden ist, wobei dieser oder diese Innenwandabschnitt(e) (8), zusammen mit der Wand (6‴) des Körpers (6', 6") der Wanne (6), den Boden (6') der Wanne (6) bildet bzw. bilden, der flächenbezogen mindestens teilweise und bevorzugt überwiegend doppelwandig ist.

3. Batterieeinheit nach Anspruch 1 oder 2, **dadurch gekennzeichnet, dass** der Boden (6') der Wanne (6) mindestens einen Wärmeträgerfluid-Zirkulationskreislauf (4) mit flächiger Erstreckung beinhaltet, der in die Struktur des Bodens (6') integriert ist und mit den Zellen oder Elementen (2) durch den oder die Innenwandabschnitt(e) (8) hindurch in Kontakt ist, wobei dieser oder jeder Kreislauf (4) vorteilhafterweise in Kreislaufabschnitte (9) unterteilt ist, von denen jeder bevorzugt einem Modul (2') zugeordnet ist und sich unter diesem entsprechenden Modul (2') erstreckt, und dadurch, dass der oder jeder Zirkulationskreislauf (4) mit den Einrichtungen zum Verteilen und zum Sammeln (5) verbunden ist und zwischen einem oder mehreren Innenwandabschnitt(en) (8) in Kontakt mit den Zellen oder Elementen (2') und der Wand (6"') des Körpers (6', 6") der Wanne (6) gebildet ist.

4. Batterieeinheit nach einem der Ansprüche 1 bis 3, **dadurch gekennzeichnet, dass** die Wanne (6) eine rechteckige Form aufweist.

5. Batterieeinheit nach einem der Ansprüche 1 bis 4, **dadurch gekennzeichnet, dass** jeder Kanal zum Zuführen oder zum Sammeln und zum Abführen (5', 5") ein jeweiliges Anschlussstück (10, 10') beinhaltet und mit den Wärmeträgerfluid-Zirkulationseinrichtungen (4), die mindestens in den Boden (6') der Wanne (6) integriert sind, über Neben- oder Abzweigleitungen (11) verbunden ist, welche die Wand (6‴) des Körpers (6', 6") der Wanne (6) durchdringen.

6. Batterieeinheit nach einem der Ansprüche 1 bis 5, **dadurch gekennzeichnet, dass** die Zirkulationseinrichtungen (4), die in den Körper (6', 6") der Wanne (6) integriert sind, bevorzugt an ihrem Boden (6') zwischen Innenwandabschnitten (8) und der Wand (6‴) des Körpers (6', 6") der Wanne (6), elementare Zirkulationsvolumina (9) umfassen, die jeweils zwischen einem Innenwandabschnitt (8) in Kontakt mit den Zellen und Elementen (2), zum einen, und der Wand (6‴) des Körpers (6', 6") der Wanne (6), zum anderen, gebildet sind und alle fluidisch entweder einzeln in Reihe und gemeinsam mit den Zirkulationseinrichtungen (4) oder einzeln und parallel zu den Zirkulationseinrichtungen (4) verbunden sind.

7. Batterieeinheit nach Anspruch 6, **dadurch gekennzeichnet, dass** jedes elementare Zirkulationsvolumen (9) eine U-, S- oder schlangenförmige Grundform aufweist, wobei die freien Enden des U, des S oder der Schlange fluidisch entweder mit jeweils vorausgehenden und folgenden elementaren Zirkulationsvolumina (9) in einer Reihenanordnung oder mit den Kanälen (5, 5") der Zirkulationseinrichtungen (4) durch Neben- oder Abzweigleitungen (11) verbunden sind.

8. Batterieeinheit nach einem der Ansprüche 5 bis 7, **dadurch gekennzeichnet, dass** die Kanäle zum Zuführen (5') und zum Abführen (5") der Einrichtungen zum Verteilen und zum Sammeln (5) und gegebenenfalls die oder einige Neben- oder Abzweigleitung oder -leitungen (11) röhrenförmige Wände umfassen, die teilweise durch die Wand (6‴) des Körpers (6', 6") der Wanne (6) und teilweise durch an die Wand (6‴) angeformtes thermoplastisches Material (14) oder durch komplementär ausgebildete Wandabschnitte (14), die durch Schweißen mit der Wand (6‴) zusammengefügt sind, gebildet werden.

9. Batterieeinheit nach einem der Ansprüche 2 oder 3 und 5 bis 8, soweit rückbezogen auf Anspruch 2, **dadurch gekennzeichnet, dass** der oder jeder Innenwandabschnitt (8) aus einem angesetzten Teil wie einer Platte besteht, das auf dichte Weise mit der Wand (6‴) des Bodens (6') der Wanne (6) an einer entsprechenden Vertiefung oder Mulde (12) von Letzterer fest verbunden ist, wobei der oder jeder Innenwandabschnitt (8) aus einem Material mit hoher Wärmeleitfähigkeit ausgeführt ist, insbesondere einem metallischen Material oder einem thermoplastischen Material mit verbesserten wärmeleitenden Eigenschaften.

10. Batterieeinheit nach einem der Ansprüche 1 bis 9, **dadurch gekennzeichnet, dass** die Wanne (6) eine Aussteifungsstruktur (13) umfasst, die in den Körper (6', 6") der Wanne (6) integriert ist, beispielsweise durch das thermoplastische Material angeformt ist, aus dem die Wand (6‴) des Körpers (6', 6") der Wanne (6) besteht.

11. Batterieeinheit nach einem der Ansprüche 1 bis 9, **dadurch gekennzeichnet, dass** die Wanne (6) eine Aussteifungsstruktur (13) umfasst, die außen formschlüssig mit der thermoplastischen Wand (6‴) der Wanne (6) zusammenwirkt, zum Beispiel vom Typ Rahmen, der insbesondere eine mediane und umfängliche Versteifung ergibt.

12. Batterieeinheit nach einem der Ansprüche 1 bis 11, **dadurch gekennzeichnet, dass** die Wanne (6) mindestens eine Unterteilungsinnenwand (15) umfasst, die sich einstückig vom Boden (6') aus erstreckt, vorteilhafterweise mit einer Aussteifungsstruktur (13) zusammenwirkt und gegebenenfalls Wärmeträgerfluid-Zirkulationsvolumina integriert, die bevorzugt zu den Zirkulationseinrichtungen (4) der Wanne (6) gehören und fluidisch mit dem Einrichtungen zum Verteilen und zum Sammeln (5) verbunden sind.

13. Batterieeinheit nach einem der Ansprüche 1 bis 12, **dadurch gekennzeichnet, dass** der Deckel (7) ebenfalls Einrichtungen zum Verteilen und zum Sammeln und zur Zirkulation von Wärmeträgerfluid beinhaltet, die strukturell in den Körper des Deckels (7) integriert sind, und vorteilhafterweise, mindestens teilweise, eine doppelwandige Struktur aufweist, die Zirkulationsvolumina ergibt, die beispielsweise zwischen Innenwandabschnitten und der Außenwand des Deckels (7) gebildet sind, wobei die Innenwandabschnitte bevorzugt in Kontakt mit den oberen Teilen der Batteriezellen oder -elemente (2) sind und die Einrichtungen zum Verteilen und zum Sammeln des Deckels vorteilhafterweise fluidisch mit den Einrichtungen zum Verteilen und zum Sammeln (5) der Wanne (6) verbunden sind.

14. Batterieeinheit nach einem der Ansprüche 1 bis 13, **dadurch gekennzeichnet, dass** eine Einrichtung (16) zur Überwachung der Temperatur, der Zirkulation und/oder der Verteilung des Wärmeträgerfluids strukturell oder sogar materiell mindestens zum Teil in das Gehäuse (3) integriert ist, beispielsweise an den Einrichtungen zum Verteilen und zum Sammeln (5) oder den Seitenwänden (6") des Körpers (6', 6") der Wanne (6).

15. Kraftfahrzeug, insbesondere elektrisch oder hybrid, **dadurch gekennzeichnet, dass** es mindestens eine Batterieeinheit (1) nach einem der Ansprüche 1 bis 14 umfasst, wobei diese Batterieeinheit (1) ferner mindestens eine Einrichtung zum Messen der Innentemperatur, Einrichtungen zum elektrischen Anschließen der Zellen oder Elemente (2) untereinander und Einrichtungen (17) zum externen Anschließen beinhaltet, wobei Letztere vorteilhafterweise teilweise mit oder in der Wand (6‴) des Körpers (6', 6") der Wanne (6) und/oder der Wand des Deckels (7) gebildet sind.

## Claims

1. Battery unit (1), notably for a hybrid and/or electric motor vehicle, comprising, on the one hand, a plurality of battery cells (2) or elements, if necessary grouped together physically and/or electrically in several blocks or modules (2'), on the other hand, a housing (3) accommodating and surrounding said cells or elements (2) and, finally, means (4, 5) for regulating the temperature of said cells or elements (2) by circulation of heat-transfer fluid,
said battery unit (1) being **characterized**
**in that** the housing (3) is made of a plastic material and consists of a molded bottom tray (6), with a bottom (6') and lateral walls (6") forming the body (6', 6") of the tray (6), and of a top cover (7), which are assembled peripherally, preferentially by screwing,
**in that** at least the tray (6) comprises means (4, 5) for distributing and collecting and circulating the heat-transfer fluid which are incorporated structurally in the body (6', 6") of said tray (6), by being formed at least partially of a single piece therewith, and
**in that** the distribution and collection means (5) comprise at least one duct (5') for supplying heat-transfer fluid and at least one duct (5") for collecting and discharging heat-transfer fluid, and are arranged on at least a part of the lateral perimeter of the tray (6) and are formed in and/or on the outer face of the wall (6‴) of the body (6', 6'') of said tray (6).

2. Battery unit according to Claim 1, **characterized in that** the tray (6) comprises, at its bottom (6') on which the cells or elements (2) are arranged, at least one internal portion of wall (8) in contact with said cells or elements (2), this or each internal portion of wall (8) defining, with the wall (6‴) of the body (6', 6") of the tray (6) of the housing (3), a volume (9) for circulation of heat-transfer fluid linked to the distribution and collection means (5), this or these internal portions of wall (8) forming, together with the wall (6''') of the body (6', 6'') of the tray (6), the bottom (6') of the tray (6) which is on its surface at least partially, and preferentially mostly, double-walled .

3. Battery unit according to Claim 1 or 2, **characterized in that** the bottom (6') of the tray (6) comprises at least one circuit (4) for circulation of heat-transfer fluid with surface extension, incorporated in the structure of the bottom (6') and in contact with the cells or elements (2) through the internal portion or portions of wall (8), this or each circuit (4) being advantageously subdivided into portions of circuit (9), each of which is preferentially associated with a module (2') and extends under this corresponding module (2'), and **in that** said or each circulation circuit (4) is linked to the distribution and collection means (5) and formed between one or more internal portions of wall (8) in contact with the cells or elements (2') and the wall (6‴) of the body (6', 6") of the tray (6).

4. Battery unit according to any one of Claims 1 to 3, **characterized in that** the tray (6) has a rectangular form.

5. Battery unit according to any one of Claims 1 to 4, **characterized in that** each supply or collection and discharge duct (5', 5") comprises a respective connection end-fitting (10, 10') and is linked to the heat-transfer fluid circulation means (4), incorporated in the bottom (6') at least of the tray (6), by secondary or tapping lines (11) passing through the wall (6‴) of the body (6', 6'') of said tray (6).

6. Battery unit according to any one of Claims 1 to 5, **characterized in that** the circulation means (4) incorporated in the body (6', 6") of the tray (6), preferentially in its bottom (6') between internal portions of wall (8) and the wall (6‴) of the body (6', 6") of said tray (6), comprise elementary circulation volumes (9) each formed between an internal portion of wall (8) in contact with the cells or elements (2), on the one hand, and the wall (6‴) of the body (6', 6") of the tray (6), on the other hand, and all linked fluidically either individually in series and collectively to the circulation means (4), or individually and in parallel to the circulation means (4) .

7. Battery unit according to Claim 6, **characterized in that** each elementary circulation volume (9) has a generally U, S or serpentine form, the free ends of said U, S or serpentine form being fluidically linked either to respectively preceding and following elementary circulation volumes (9) in a series arrangement, or to the ducts (5, 5") of the circulation means (4), by secondary or tapping lines (11).

8. Battery unit according to any one of Claims 5 to 7, **characterized in that** the supply (5') and discharge (5") ducts of the distribution and collection means (5), and if necessary the or some secondary or tapping lines (11), comprise tubular walls formed partially by the wall (6‴) of the body (6', 6") of the tray (6) and partially by the thermoplastic material (14) overmolded on said wall (6‴) or by complementary portions of wall (14) which are assembled by welding with said wall (6‴).

9. Battery unit according to any one of Claims 2 or 3 and 5 to 8, as far as they relate to Claim 2, **characterized in that** the or each internal portion of wall (8) consists of an added piece, such as a plate, tightly secured with the wall (6‴) of the bottom (6') of the tray (6), at a corresponding depression or cup (12) thereof, the or each internal portion of wall (8) being made of a material with high thermal conductivity, notably a metallic material or a thermoplastic material with enhanced heat-conducting properties.

10. Battery unit according to any one of Claims 1 to 9, **characterized in that** the tray (6) comprises a reinforcing structure (13) incorporated in the body (6', 6") of the tray (6), for example overmolded by the thermoplastic material forming the wall (6‴) of the body (6', 6'') of said tray (6).

11. Battery unit according to any one of Claims 1 to 9, **characterized in that** the tray (6) comprises a reinforcing structure (13) cooperating externally by conjugation of forms with the thermoplastic wall (6‴) of said tray (6), for example of the frame type notably providing a median and peripheral stiffening.

12. Battery unit according to any one of Claims 1 to 11, **characterized in that** the tray (6) comprises at least one subdividing internal wall (15), extending in a single piece from the bottom (6'), advantageously cooperating with a reinforcing structure (13) and incorporating, if necessary, heat-transfer fluid circulation volumes, preferentially forming part of the circulation means (4) of the tray (6) and fluidically linked to the distribution and collection means (5).

13. Battery unit according to any one of Claims 1 to 12, **characterized in that** the cover (7) also comprises means for distributing and collecting and circulating heat-transfer fluid incorporated structurally in the body of said cover (7), and advantageously has, at least partially, a double-walled structure providing circulation volumes, for example formed between the internal portions of wall and the outer wall of said cover (7), said internal portions of wall being preferentially in contact with the top parts of the battery cells or elements (2) and the distribution and collection means of the cover being advantageously linked fluidically to the distribution and collection means (5) of the tray (6).

14. Battery unit according to any one of Claims 1 to 13, **characterized in that** a means (16) for controlling the temperature, the circulation and/or the distribution of the heat-transfer liquid is incorporated structurally, even materially, at least partly in the housing (3), for example at the distribution and collection means (5) or the lateral walls (6") of the body (6', 6") of the tray (6) .

15. Motor vehicle, in particular electric or hybrid, **characterized in that** it comprises at least one battery unit (1) according to any one of Claims 1 to 14, this battery unit (1) also comprising at least one internal temperature measurement means, means for electrically connecting the cells or elements (2) to one another and external connection means (17), the latter being advantageously partially formed with or in the wall (6‴) of the body (6', 6") of the tray (6) and/or the wall of the cover (7).
